# EUROPEAN PATENT SPECIFICATION

(11) **EP 2 898 657 B1**
(45) Date of publication and mention of the grant of the patent: **07.02.2018**
(21) Application number: 13840105.4
(22) Date of filing: 11.09.2013
(51) Int. Cl.: H04L 29/08, G06F 3/0482, G06F 17/30

(54) **METHOD AND SYSTEM FOR MOVING BOOKMARKS FOR A MOBILE BROWSER**
VERFAHREN UND SYSTEM ZUM BEWEGEN VON LESEZEICHEN FÜR EINEN MOBILEN BROWSER
PROCÉDÉ ET SYSTÈME DE DÉPLACEMENT DE SIGNETS POUR UN NAVIGATEUR MOBILE

(30) Priority: 18.09.2012 CN 201210346459
(43) Date of publication of application: 29.07.2015
(73) Proprietor: Tencent Technology (Shenzhen) Company Limited, Shenzhen, Guangdong 518044 (CN)
(72) Inventor: LIN, Xiaodan, Shenzhen, Guangdong 518044 (CN); MO, Sha, Shenzhen, Guangdong 518044 (CN)
(74) Representative: Epping - Hermann - Fischer
(86) International application number: PCT/CN2013/083322
(87) International publication number: WO 2014/044143

(56) References cited:
- EP-A1- 1 914 641
- WO-A1-2007/058084
- CN-A- 102 347 966
- US-A1- 2010 198 918
- Rick Castellini: "How I use Xmarks.com to sync and backup my bookmarks (favorites)", YouTube, 12 June 2010 (2010-06-12), pages 1-2, XP054976436, Retrieved from the Internet: URL:https://www.youtube.com/watch?v=bSugLk DyIrQ [retrieved on 2016-03-22]
- Jason Fitzpatrick: "Multi Links Makes it a Snap to Open, Copy, or Bookmark Multiple Links", lifehacker, 14 October 2009 (2009-10-14), pages 1-2, XP055260562, Retrieved from the Internet: URL:http://lifehacker.com/5380541/multi-li nks-makes-it-a-snap-to-open-copy-or-bookma rk-multiple-links [retrieved on 2016-03-23]
- Anonymous: "A Utility to Bookmark All Links? - bookmarks utilities scripts | Ask MetaFilter", Ask Metafiler, 10 March 2005 (2005-03-10), pages 1-3, XP055259767, Retrieved from the Internet: URL:http://ask.metafilter.com/16169/A-Util ity-to-Bookmark-All-Links [retrieved on 2016-03-18]

## Description

### CROSS-REFERENCES TO RELATED APPLICATIONS

This application claims priority of Chinese Patent Application No. 201210346459.8, filed on September 18, 2012.

### FIELD OF THE INVENTION

The present invention generally relates to the Internet technologies and, more particularly, to a method and system for moving browser bookmarks for mobile terminals.

### BACKGROUND

With mobile browsers, because the bookmark facility is often attached to a particular browser, a mobile phone user may keep using a particular mobile browser due to the bookmarks. Even when the user needs to import bookmarks from another browser, mostly the user may just import bookmarks from a system browser or a PC browser, and is often unable to import bookmarks from other third-party browsers.

Currently, it is relatively easy to input bookmarks into the mobile browser from the system browser and the PC browser. However, when importing third-party browser bookmarks, a few issues may still exist.

First, the bookmark directory in a third-party browser may be not fixed. A third-party browser may change settings along changes in its version, including changes of the bookmark directory address.

Second, the third-party browser bookmark folder may be encrypted. Encryption may increase the difficulty of breaking the encryption, and the encryption format of the third-party browser may change in subsequent new versions, such as new encryption keys, thereby greatly increasing the cost for the user to switch browsers.
Reference US2010198918A discloses method, system, and computer program product for transferring selected open browser tabs from a host computer to a client computer. The method includes copying a selected number of hyperlink addresses from a plurality of hyperlink addresses associated with a plurality of selected open browser tabs in a first browser of the host computer. A hyperlink import module of the client computer is activated for transferring the copied hyperlink addresses from the host computer. Before the transfer can occur, the client computer is authenticated. After authentication, the user of the client computer selects a subset of the copied hyperlink addresses from the host computer. Only the subset of the copied hyperlink addresses is transferred from the host computer to the client computer. The client user opens the subset of the copied hyperlink addresses in a second browser of the client computer for displaying.
Reference US2010198918A discloses further a hyperlink import (HI) module of client computer is activated. According to one embodiment, the hyperlink import module is activated at the client computer side by selecting a data import icon on the browser of client computer. When activated, the data import icon enables a client user to import options, bookmarks, browsing history, passwords, and other browsing related data from host computer. According to an example, a client user has the option of selecting to import data from another browser on the same client computer or from host computer.
R. Castelini discusses that how I use Xmarks.com to sync and backup my bookmarks (favorites), in YouTube (12 June 2010, https://www.youtube.com//watch?v=bSugLkDylrQ).

The disclosed method and system are directed to solve one or more problems set forth above and other problems.

### BRIEF SUMMARY OF THE DISCLOSURE

One aspect of the present disclosure includes a method for moving bookmarks on a mobile terminal having a mobile browser. The method includes receiving a triggering instruction from a user of the mobile browser, triggering bookmark moving function on the mobile terminal and prompting, on a bookmark page of the mobile browser, the user to select at least one target browser having bookmarks to be moved from a list of available browsers. The available browsers include at least a third-party browser and a system browser. Further, the method includes determining the target browser selected by the user. In response to the target browser selected by the user being the third-party browser, an account login page of the third-party browser is linked to, and when the user successful logs in the account, online bookmarks of the third-party browser are obtained with a crawling method using a web crawler and the online bookmarks of the third-party browser are imported into the mobile browser. In response to the target browser selected by the user being a system browser, a directory of bookmarks of the system browser is obtained and the bookmarks of the system browser are imported into the mobile browser. The system browser is a browser installed on the mobile terminal and which stores bookmarks locally on the mobile terminal in an importable format, and the third-party browser is a mobile browser, other than the system browser, that supports online bookmark functionality.

Another aspect of the present disclosure includes a mobile terminal having a mobile browser. The mobile terminal includes a trigger module, a selection module, and a moving module. The trigger module is configured to receive a triggering instruction from a user of the mobile browser, and to trigger bookmark moving function on the mobile terminal. The selection module is configured to prompt, on a bookmark page of the mobile browser, the user to select at least one target browser having bookmarks to be moved from a list of available browsers, and to determine the target browser selected by the user. The available browsers include at least a third-party browser and a system browser. Further, the moving module is configured as follows: in response to the target browser selected by the user being the third-party browser, an account login page of the third-party browser is linked to, and when the user successful logs in the account, online bookmarks of the third-party browser are obtained with a crawling method using a web crawler and the online bookmarks of the third-party browser are imported into the mobile browser; and in response to the target browser selected by the user being a system browser, a directory of bookmarks of the system browser is obtained and the bookmarks of the system browser are imported into the mobile browser. The system browser is a browser installed on the mobile terminal and which stores bookmarks locally on the mobile terminal in an importable format, and the third-party browser is a mobile browser, other than the system browser, that supports online bookmark functionality.

Other aspects of the present disclosure can be understood by those skilled in the art in light of the description, the claims, and the drawings of the present disclosure.

### BRIEF DESCRIPTION OF THE DRAWINGS

Figure 1 illustrates a flow diagram of an exemplary bookmark moving process consistent with the disclosed embodiments;
Figures 2A-2C illustrates user interfaces of an exemplary bookmark moving process consistent with the disclosed embodiments;
Figure 3 illustrates a flow diagram of an exemplary bookmark moving operation consistent with the disclosed embodiments;
Figure 4 illustrates a block diagram of an exemplary bookmark moving system consistent with the disclosed embodiments;
Figure 5 illustrates a block diagram of an exemplary bookmark moving module consistent with the disclosed embodiments;
Figure 6 illustrates an exemplary operating environment incorporating certain disclosed embodiments; and
Figure 7 illustrates a block diagram of an exemplary computer system consistent with the disclosed embodiments.

### DETAILED DESCRIPTION

Reference will now be made in detail to exemplary embodiments of the invention, which are illustrated in the accompanying drawings.

A user may use different mobile browsers from time to time. When using a new browser, the user may also want to move or import bookmarks from other browsers or other devices to the new mobile browser. There may be various types of browsers for moving the bookmarks. For example, the user may move bookmarks from a system browser, a PC-side browser, and a third-party browser, etc. A system browser may refer to a browser provided by the mobile device maker, which may be a standard default browser used on the mobile terminal. A PC-side browser may refer to a browser used by the user on a personal computer (PC), such as a QQ Bookmark or QQ browser, which is a PC program used by the user and not a mobile browser. The PC browser may communicate with a server that allow the user to store and retrieve bookmarks via network. Further, a third-party browser may refer to any other type of browser (e.g., mobile browsers) that supports online bookmark functionality.

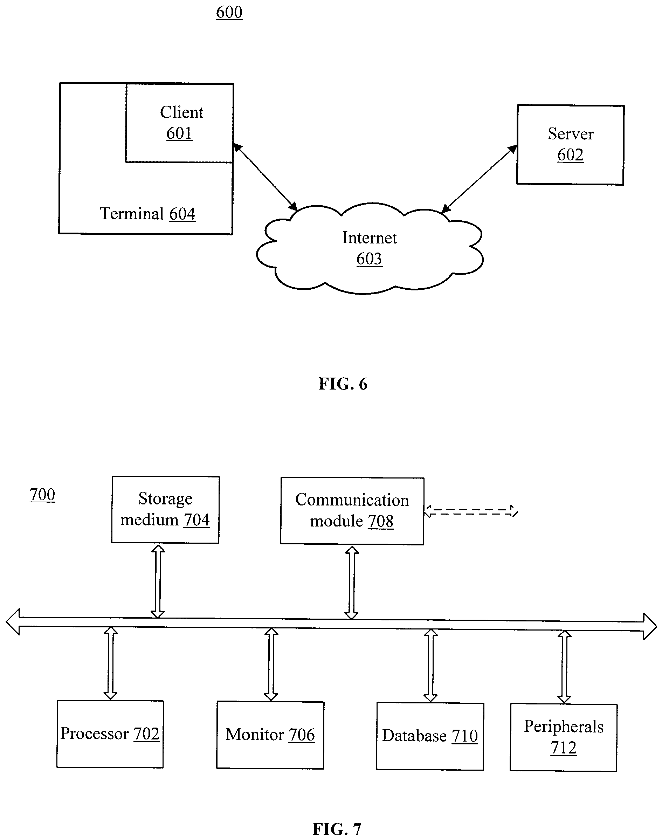

Figure 6 illustrates an exemplary operating environment 600 incorporating certain disclosed embodiments. As shown in Figure 6, environment 600 may include a terminal 604, the Internet 603, and a server 602. The Internet 603 may include any appropriate type of communication network for providing network connections to the terminal 604 and the server 602. For example, Internet 603 may include the Internet or other types of computer networks or telecommunication networks, either wired or wireless.

A server, as used herein, may refer to one or more server computers configured to provide certain web server functionalities to provide certain personalized services, which may require any user accessing the services to authenticate to the server before the access. A web server may also include one or more processors to execute computer programs in parallel.

The server 602 may include any appropriate server computers configured to provide certain server functionalities, such as a web server functionality, a QQ server functionality, and/or a third-party browser server functionality for responding a user's request for web browsing operations including moving or importing bookmarks, etc., or other application server. Although only one server is shown, any number of servers can be included. The server 602 may be operated in a cloud or non-cloud computing environment.

Terminal 604 may include any appropriate type of mobile computing devices, such as mobile phones, smart phones, tablets, notebook computers, or any type of computing platform. Terminal 604 may include one or more clients 601. The client 601, as used herein, may include any appropriate mobile application software, hardware, or a combination of application software and hardware to achieve certain client functionalities. For example, client 601 may include a mobile browser. According to actual needs in different terminals, a mobile client may be a browser installed on the terminal for browsing, including various types of existing and future browser installed on terminals. Although only one client 601 is shown in the environment 600, any number of clients 601 may be included.

Terminal 604 and/or server 602 may be implemented on any appropriate computing platform. Figure 7 illustrates a block diagram of an exemplary computer system 700 capable of implementing terminal 604 and/or server 602.

As shown in Figure 7, computer system 700 may include a processor 702, a storage medium 704, a monitor 706, a communication module 708, a database 710, and peripherals 712. Certain devices may be omitted and other devices may be included.

Processor 702 may include any appropriate processor or processors. Further, processor 702 can include multiple cores for multi-thread or parallel processing. Storage medium 704 may include memory modules, such as Read-only memory (ROM), Random Access Memory (RAM), flash memory modules, and erasable and rewritable memory, and mass storages, such as CD-ROM, U-disk, and hard disk, etc. Storage medium 704 may store computer programs for implementing various processes, when executed by processor 702.

Further, peripherals 712 may include I/O devices such as keyboard and mouse, and communication module 708 may include network devices for establishing connections through the communication network. Database 710 may include one or more databases for storing certain data and for performing certain operations on the stored data, such as database searching.

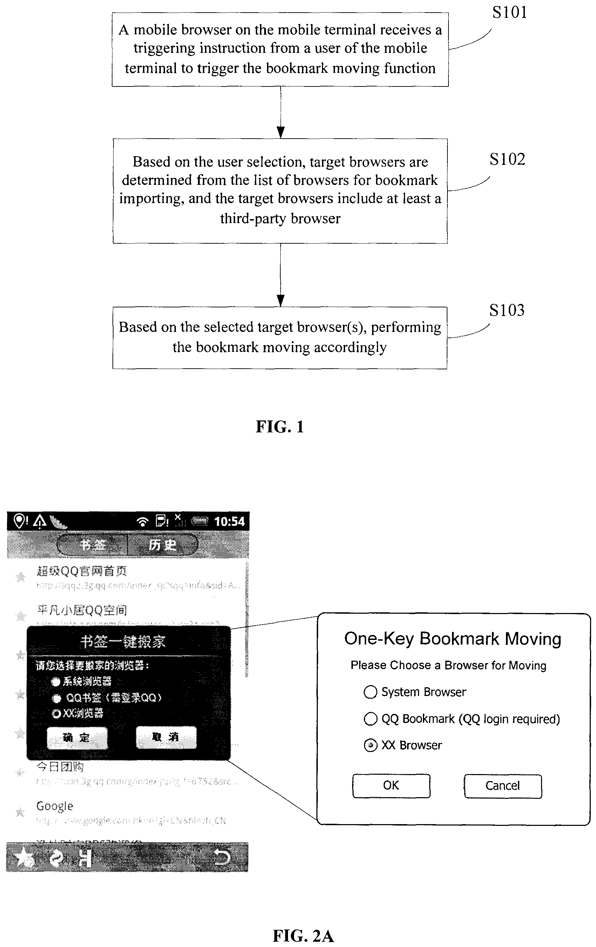

In operation, terminals/clients and/or servers 602 may provide a mobile browser bookmark moving service to a user of the terminal. Figure 1 illustrates a flow diagram of an exemplary bookmark moving process consistent with the disclosed embodiments.

As shown in Figure 1, the bookmark moving process may include the following steps.

Step S101, a mobile browser on the mobile terminal receives a triggering instruction from a user of the mobile terminal to trigger the bookmark moving function.

The mobile browser on the mobile terminal is provided with a browser bookmark moving function. For example, the bookmark moving function may be implemented on the bookmark page of the mobile browser and may be accessible through a user interface, such as a button or a command. The user may select a "bookmark moving" button on the bookmark page of the mobile browser to trigger the bookmark moving function.

After being triggered, the bookmark moving function is configured to prompt the user to select at least one target browser (i.e., the browser providing bookmarks to be moved) from a list of browsers available. The user may select one or more target browsers to import the bookmarks from the target browsers into the mobile browser currently used by the user (i.e., the destination browser).

Step S102, based on the user selection, target browsers are determined from the list of browsers for bookmark importing, and the target browsers include at least a third-party browser.

The system browser may have a fixed path for the browser bookmark folder (i.e., the path of the system browser bookmark folder does not change). Further, the system browser's bookmark folder in general is not encrypted. The mobile browser (e.g., the bookmark moving function) can import all bookmarks in the system browser's bookmark folder to the mobile browser according to the path of the system browser's bookmark folder.

To import bookmarks from a PC-side browser, the mobile browser needs a user name and password to import the bookmarks of the PC-side browser. However, for third party browser bookmarks, different approaches may be needed because the third party browsers may have different bookmark folders and the bookmark folders may be encrypted.

That is, while it may be easy to import bookmarks from the system browser or a PC-side browser, importing bookmarks from a third-party browser may be difficult. The bookmark directory in a third-party browser may be not fixed. A third-party browser may change setting along changes in its version, including changes of the bookmark directory address. Further, a third-party browser bookmark folder may be encrypted. Encryption may increase the difficulty of breaking the encryption, and the encryption format of the third-party browser may change in subsequent new versions, such as new encryption keys, thereby greatly increasing the cost for the user to switch browsers.

To obtain the content of the online bookmarks from a third party browser, a bookmark extraction mechanism may need to be used, such as a web crawler technology or similar technology based bookmark extraction method.

According to the web crawler technology, a web crawler is also known as a web spider, which can automatically extract webpage programs according to certain rules, as well as automatically exact Internet webpages through the network. Web crawler technology is generally used to check whether all links on a website are valid, or is used to save relevant data of webpages for a search engine. Search engines often use web crawlers to find web contents. Because HTML documents on the network using hyperlinks to be connected together, as if they are woven into a web, and the web crawler crawls along this web. Whenever reaching a webpage, the web crawler obtains the webpage using a crawling program, and extracts contents from the webpage. Further, the web crawler extracts hyperlinks as clues for further crawling.

Step S103, based on the selected target browser(s), performing the bookmark moving accordingly.

Specifically, after the user triggers the bookmark moving operation, the user selects the target browser(s). If the user selects to import bookmarks from the system browser, the mobile browser starts the moving action, which obtains the path of the bookmark folder of the system browser and imports all bookmarks into the mobile browser.

If the user selects to import bookmarks from the PC-side browser, the mobile browser pops up a login window. After the user successfully logs in, the bookmark moving operation can be performed. Further, if the user selects to import bookmarks from the third-party browser, the mobile terminal links to the third-party browser's account login page. After the user enters account number and password and successful logs in, the online bookmarks of the third-party browser can be displayed to the user. Based on the crawler technology, the third-party web browser bookmarks are crawled down, and then be imported into the mobile browser, thereby achieving a third-party browser bookmark moving operation.

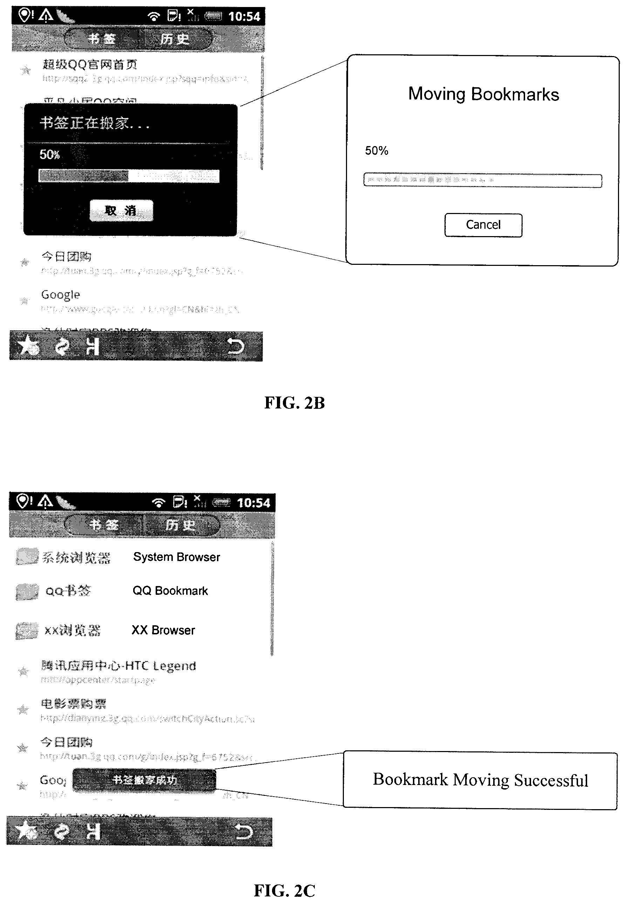

Figures 2A, 2B, and 2C illustrate an exemplary bookmark importation process for third-party browsers. As shown in Figure 2A, after the user triggers the bookmark moving function, the mobile browser prompts the user with available preset target browsers for bookmark moving operation (i.e., the browsers with bookmarks to be imported into the mobile terminal) as optional selection choices. The selections include the system browser, the QQ Bookmark (PC-side browser), and the XX browser (e.g., a third-party browser).

The users can choose whether the bookmarks to be moved are the system browser bookmarks, QQ bookmarks, and/or XX browser bookmarks.

The user may select the XX browser options, shown in Figure 2A, and may click on the "OK" button on the prompt window over the bookmark page. The mobile browser establishes a link to the account homepage of the XX browser. The user then enters account number and password, and successfully logs in such that the online bookmarks in the XX browsers can be displayed to the user. Further, using the crawler, the online bookmarks can be crawled down and imported into the local mobile browser on the mobile terminal.

At this time, as shown in Figure 2B, the mobile browser also displays a status bar and a percentage to reflecting the bookmark moving progress. When the moving operation completes, the mobile browser may display a bookmark moving successful message, shown in Figure 2C.

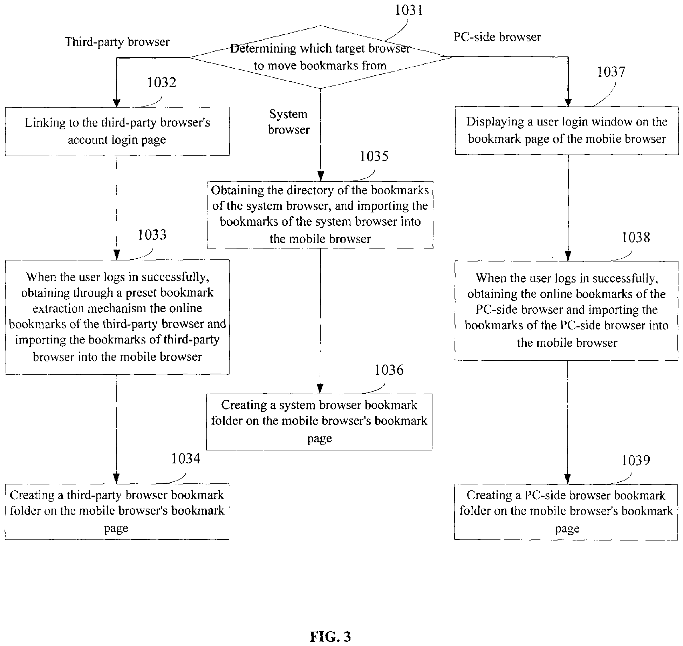

Thus, more particularly, Step 103 above may include the following steps, as shown in Figure 3.

Step S1031, determining the option selected by the user as to which target browser to move bookmarks from. When it is determined that the selected target browser is the third-party browser, the process goes to Step S1032; when it is determined that the selected target browser is the system browser, the process goes to Step S1035; and when it is determined that the selected target browser is the PC-side browser, the process goes to Step S1037.

Step S1032, linking to the third-party browser's account login page.

Step S1033, when the user logs in successfully, obtaining through a preset bookmark extraction mechanism the online bookmarks of the third-party browser and importing the bookmarks of third-party browser into the mobile browser. The preset bookmark extraction mechanism includes at least a crawling method using a web crawler.

Step S1034, creating a third-party browser bookmark folder on the mobile browser's bookmark page.

Step S1035, obtaining the directory (or path) of the bookmarks of the system browser, and importing the bookmarks of the system browser into the mobile browser.

Step S1036, creating a system browser bookmark folder on the mobile browser's bookmark page.

Step S1037, displaying a user login window on the bookmark page of the mobile browser.

Step S1038, when the user logs in successfully, obtaining the online bookmarks of the PC-side browser and importing the bookmarks of the PC-side browser into the mobile browser.

Step S1039, creating a PC-side browser bookmark folder on the mobile browser's bookmark page.

As shown in Figure 2C, the system browser bookmark folder, the PC-side browser bookmark folder, and the third-party browser bookmark folder are created on the bookmark page of the mobile browser, after the bookmark moving operation is performed successfully for the system browser, the PC-side browser, and the third-party browser.

Thus, the bookmark moving function can be achieved for importing bookmarks from the system browser, the PC-side browser, and the third-party browser, ensuring the integrity of bookmarks used by the user and greatly reducing the cost for the user cost to switch browsers.

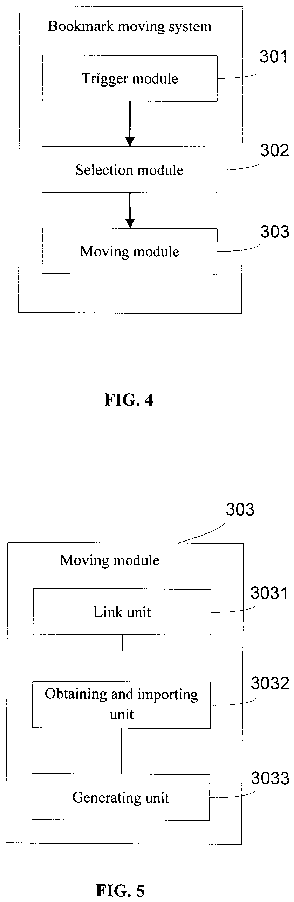

Figure 4 illustrates an exemplary bookmark moving system consistent with the disclosed embodiments. As shown in Figure 4, the bookmark moving system includes a trigger module 301, a selection module 302, and a moving module 303.

The trigger module 301 may be used in the mobile browser for receiving a triggering instruction from the user to trigger the bookmark moving function. The select module 302 is configured to determine, based on the user selection, a target browser from a list of browsers for bookmark importing, and the target browsers include at least a third-party browser. Further, the moving module 303 is provided to perform the bookmark moving operation based on the target browser(s) selected by the user.

That is, the bookmark moving function is provided in the mobile browser for the user on the mobile terminal. When the user selects a "bookmark moving" button on the bookmark page of the mobile browser, the trigger module 301 is triggered to trigger the bookmark moving function. After being triggered, the bookmark moving function is configured to prompt the user to select at least one target browser (i.e., the browser providing bookmarks to be moved) from a list of browsers available. The user may select a target browser to import the bookmarks from the target browsers into the mobile browser currently used by the user (i.e., the destination browser).

The selection module 302 selects a target browser for bookmark importing based on the user's selection of the browser selection options, and the selection of target browsers include at least a third-party browser. Thus, bookmarks on the target browsers (e.g., the system browser, the PC-side browser, and the third-party browser) can be easily moved into the user's mobile terminal, in particular the third-party browser bookmarks, reducing the cost for the user to switch mobile browsers.

As previously described, while it may be relatively easy to import bookmarks from the system browser or a PC-side browser, importing bookmarks from a third-party browser may be difficult. The bookmark directory in a third-party browser may be not fixed. A third-party browser may change setting along changes in its version, including changes of the bookmark directory address. Further, a third-party browser bookmark folder may be encrypted. Encryption may increase the difficulty of breaking the encryption, and the encryption format of the third-party browser may change in subsequent new versions, such as new encryption keys, thereby greatly increasing the cost for the user to switch browsers.

To obtain the content of the online bookmarks from a third-party browser, the bookmark moving system uses a bookmark extraction mechanism, such as a web crawler technology or similar technology based bookmark extraction method, to obtain bookmarks from the third-party browser.

According to the web crawler technology, a web crawler is also known as a web spider, which can automatically extract webpage programs according to certain rules, as well as automatically exact Internet webpages through the network. Web crawler technology is generally used to check whether all links on a website are valid, or is used to save relevant data of webpages for a search engine. Search engines often use web crawlers to find web contents. Because HTML documents on the network using hyperlinks to be connected together, as if they are woven into a web, and the web crawler crawls along this web. Whenever reaching a webpage, the web crawler obtains the webpage using a crawling program, and extracts contents from the webpage. Further, the web crawler extracts hyperlinks as clues for further crawling.

More specifically, after the user triggers the bookmark moving operation, and selects the target browser for moving the bookmarks, the moving module 303 performs the moving operation according to the target browser selected by the user.

If the user selects to import bookmarks from the system browser, the moving module 303 starts the moving action, which obtains the path of the bookmark folder of the system browser and imports all bookmarks into the mobile browser.

If the user selects to import bookmarks from the PC-side browser, the moving module 303 pops up a login window. After the user successfully logs in, the bookmark moving operation can be performed. Further, if the user selects to import bookmarks from the third-party browser, the moving module 3031inks to the third-party browser's account login page. After the user enters account number and password and successful logs in, the online bookmarks of the third-party browser can be displayed to the user. Based on the crawler technology, the third-party web browser bookmarks are crawled down, and then be imported into the mobile browser, thereby achieving a third-party browser bookmark moving operation.

Particularly, as shown in Figure 5, to perform the above bookmark moving functions, the moving module 303 may include a link unit 3031, an obtaining and importing unit 3032, and a generating unit 3033.

The link unit 3031 is provided for, when the selection module 302 selects the third-party browser for bookmarks importing, establishing a link between the user's mobile browser and the third-party browser's account login page.

The obtaining and importing unit 3032 is provided for, when the user logs in successfully, obtaining the online bookmarks for the third-party browser by a preset extraction mechanism and importing the bookmarks into the user's mobile browser. The preset extraction mechanism includes at least a crawling method based on web crawlers.

The generating unit 3033 is provided for creating a third-party browser bookmark folder on the mobile browser's bookmark page.

The obtaining and importing unit 3032 may also be configured to obtain the directory (or path) of the bookmarks of the system browser, and to import the bookmarks of the system browser into the mobile browser. The generating unit 3033 may also be configured to create a system browser bookmark folder on the mobile browser's bookmark page.

Further, the link unit 3031 may also be configured to display a user login window on the bookmark page of the mobile browser, and the obtaining and importing unit 3032 may also be configured to, when the user logs in successfully, obtain the online bookmarks of the PC-side browser and to import the bookmarks of the PC-side browser into the mobile browser. The generating unit 3033 may also be configured to create a PC-side browser bookmark folder on the mobile browser's bookmark page.

Those skilled in the art should understand that all or part of the steps in the above method may be executed by relevant hardware instructed by a program, and the program may be stored in a computer-readable storage medium such as a read only memory, a magnetic disk, a Compact Disc (CD), and so on.

The embodiments disclosed herein are exemplary only and not limiting the scope of this disclosure. The scope of the invention is defined by the appended claims.

### INDUSTRIAL APPLICABILITY AND ADVANTAGEOUS EFFECTS

Without limiting the scope of any claim and/or the specification, examples of industrial applicability and certain advantageous effects of the disclosed embodiments are listed for illustrative purposes. Various alternations, modifications, or equivalents to the technical solutions of the disclosed embodiments can be obvious to those skilled in the art and can be included in this disclosure.

By using the disclosed methods and systems, various Internet browser based applications may be implemented. For example, the bookmark moving function can be achieved for importing bookmarks from the system browser, the PC-side browser, and the third-party browser, ensuring the integrity of bookmarks used by the user and greatly reducing the cost for the user cost to switch browsers.

## Claims

1. A method for moving bookmarks on a mobile terminal having a mobile browser, comprising:
receiving (S101) a triggering instruction from a user of the mobile browser;
triggering bookmark moving function on the mobile terminal;
prompting, on a bookmark page of the mobile browser, the user to select at least one target browser having bookmarks to be moved from a list of available browsers, wherein the available browsers include at least a third-party browser and a system browser;
determining (1031) the target browser selected by the user; and
in response to the target browser selected by the user being the third-party browser, linking (1032) to an account login page of the third-party browser, and when the user successful logs in the account, obtaining (1033) online bookmarks of the third-party browser with a crawling method using a web crawler and importing (1033) the online bookmarks of the third-party browser into the mobile browser; and
in response to the target browser selected by the user being a system browser, obtaining (1035) a directory of bookmarks of the system browser and importing (1035) the bookmarks of the system browser into the mobile browser,
wherein the system browser is a browser installed on the mobile terminal and which stores bookmarks locally on the mobile terminal in an importable format, and the third-party browser is a mobile browser, other than the system browser, that supports online bookmark functionality.

2. The method according to claim 1,
wherein after importing (1033) the online bookmarks of the third-party browser into the mobile browser, the method further comprises:
creating (1034) a third-party browser bookmark folder on the bookmark page of the mobile browser.

3. The method according to claim 1, wherein:
the available browsers include the system browser, a PC-side browser, and the third-party browser;
the available browsers are prompted to the user by an option list on the bookmark page of the mobile browser; and
the PC-side browser is a browser used by the user on a personal computer and is communicatable with a server that allow the user to store and retrieve bookmarks via network.

4. The method according to claim 1,
wherein after importing (1035) the bookmarks of the system browser into the mobile browser, the method further comprises:
creating (1036) a system browser bookmark folder on the bookmark page of the mobile browser.

5. The method according to claim 3, further comprises:
in response to the target browser selected by the user being the PC-side browser, displaying (1037) a user login window on the bookmark page of the mobile browser;
when the user logs in the user login window successfully, obtaining (1038) online bookmarks of the PC-side browser displayed to the user;
importing (1038) the bookmarks of the PC-side browser into the mobile browser; and
creating (1039) a PC-side browser bookmark folder on the bookmark page of the mobile browser.

6. A mobile terminal having a mobile browser, comprising:
a trigger module (301) configured to receive a triggering instruction from a user of the mobile browser, and to trigger bookmark moving function on the mobile terminal;
a selection module (302) configured to prompt, on a bookmark page of the mobile browser, the user to select at least one target browser having bookmarks to be moved from a list of available browsers, and to determine the target browser selected by the user, wherein the available browsers include at least a third-party browser and a system browser; and
a moving module (303) configured to:
in response to the target browser selected by the user being the third-party browser, linking to an account login page of the third-party browser, and when the user successful logs in the account, obtaining online bookmarks of the third-party browser with a crawling method using a web crawler and importing the online bookmarks of the third-party browser into the mobile browser; and
in response to the target browser selected by the user being a system browser, obtaining a directory of bookmarks of the system browser and importing the bookmarks of the system browser into the mobile browser,
wherein the system browser is a browser installed on the mobile terminal and which stores bookmarks locally on the mobile terminal in an importable format, and the third-party browser is a mobile browser, other than the system browser, that supports online bookmark functionality.

7. The mobile terminal according to claim 6,
wherein the moving module (303) is further configured to:
after importing the online bookmarks of the third-party browser into the mobile browser, create a third-party browser bookmark folder on the bookmark page of the mobile browser.

8. The mobile terminal according to claim 6, wherein:
the available browsers include the system browser, a PC-side browser, and the third-party browser;
the available browsers are prompted to the user via an option list on the bookmark page of the mobile browser; and
the PC-side browser is a browser used by the user on a personal computer and is communicatable with a server that allow the user to store and retrieve bookmarks via network.

9. The mobile terminal according to claim 6, wherein the moving module (303) is configured to:
after importing the bookmarks of the system browser into the mobile browser,
create a system browser bookmark folder on the bookmark page of the mobile browser.

10. The mobile terminal according to claim 8, wherein the moving module (303) is configured to:
in response to the target browser selected by the user being the PC-side browser, display a user login window on the bookmark page of the mobile browser;
when the user logs in the user login window successfully, obtain online bookmarks of the PC-side browser displayed to the user;
import the bookmarks of the PC-side browser into the mobile browser; and create a PC-side browser bookmark folder on the bookmark page of the mobile browser.

## Patentansprüche

1. Verfahren zum Verschieben von Bookmarks auf einem mobilen Endgerät mit einem mobilen Browser, umfassend:
Empfangen (S101) einer Auslöseanweisung von einem Benutzer des mobilen Browsers;
Auslösen einer Bookmark-Verschiebefunktion auf dem mobilen Endgerät;
Auffordern des Benutzers auf einer Bookmark-Seite des mobilen Browsers, zumindest einen Ziel-Browser mit zu verschiebenden Bookmarks aus einer Liste verfügbarer Browser auszuwählen, wobei die verfügbaren Browser zumindest einen Fremdbrowser und einen System-Browser umfassen;
Bestimmen (1031) des vom Benutzer ausgewählten Ziel-Browsers; und
als Reaktion darauf, dass der vom Benutzer ausgewählte Ziel-Browser der Fremdbrowser ist, Verlinken (1032) mit einer Account-Login-Seite des Fremdbrowsers, und wenn sich der Benutzer erfolgreich in den Account einloggt, Erhalten (1033) von Online-Bookmarks des Fremdbrowsers durch ein Crawling-Verfahren mithilfe eines Web-Crawlers, und Importieren (1033) der Online-Bookmarks des Fremdbrowsers in den mobilen Browser; und
als Reaktion darauf, dass der vom Benutzer ausgewählte Ziel-Browser ein System-Browser ist, Erhalten (1035) eines Verzeichnisses von Bookmarks des System-Browsers und Importieren (1035) der Bookmarks des System-Browsers in den mobilen Browser,
wobei der System-Browser ein auf dem mobilen Endgerät installierter Browser ist, der Bookmarks lokal auf dem mobilen Endgerät in einem importierbaren Format speichert, und der Fremdbrowser ein mobiler Browser ist, anders als der System-Browser, der die Online-Bookmark-Funktionalität unterstützt.

2. Verfahren nach Anspruch 1,
wobei nach dem Importieren (1033) der Online-Bookmarks des Fremdbrowsers in den mobilen Browser das Verfahren darüber hinaus umfasst:
Erzeugen (1034) eines Fremdbrowser-Bookmark-Ordners auf der Bookmark-Seite des mobilen Browsers.

3. Verfahren nach Anspruch 1, wobei:
die verfügbaren Browser den System-Browser, einen PC-seitigen Browser und den Fremdbrowser umfassen;
die verfügbaren Browser dem Benutzer über eine Optionsliste auf der Bookmark-Seite des mobilen Browsers angezeigt werden; und
der PC-seitige Browser ein vom Benutzer auf einem Personal-Computer verwendeter Browser ist und mit einem Server in Verbindung gesetzt werden kann, die es dem Benutzer ermöglichen, Bookmarks über ein Netzwerk abzuspeichern und abzurufen.

4. Verfahren nach Anspruch 1,
wobei nach dem Importieren (1035) der Bookmarks des System-Browsers in den mobilen Browser das Verfahren darüber hinaus umfasst:
Erzeugen (1036) eines System-Browser-Bookmark-Ordners auf der Bookmark-Seite des mobilen Browsers.

5. Verfahren nach Anspruch 3, darüber hinaus umfassend:
als Reaktion darauf, dass der vom Benutzer ausgewählte Ziel-Browser der PC-seitige Browser ist,
Anzeigen (1037) eines Benutzer-Login-Fensters auf der Bookmark-Seite des mobilen Browsers;
wenn sich der Benutzer erfolgreich in das Benutzer-Login-Fenster einloggt, Erhalten (1038) von Online-Bookmarks des PC-seitigen Browsers, die dem Benutzer angezeigt werden;
Importieren (1038) der Bookmarks des PC-seitigen Browsers in den mobilen Browser; und
Erzeugen (1039) eines PC-seitigen Browser-Bookmark-Ordners auf der Bookmark-Seite des mobilen Browsers.

6. Mobiles Endgerät mit einem mobilen Browser, aufweisend:
ein Auslösemodul (301), das dazu ausgelegt ist, eine Auslöseanweisung von einem Benutzer des mobilen Browsers zu empfangen und eine Bookmark-Verschiebefunktion auf dem mobilen Endgerät auszulösen;
ein Auswahlmodul (302), das dazu ausgelegt ist, den Benutzer auf einer Bookmark-Seite des mobilen Browsers aufzufordern, zumindest einen Ziel-Browser mit zu verschiebenden Bookmarks aus einer Liste verfügbarer Browser auszuwählen, und den vom Benutzer ausgewählten Ziel-Browser zu bestimmen, wobei die verfügbaren Browser zumindest einen Fremdbrowser und einen System-Browser umfassen; und
ein Verschiebemodul (303), das zu Folgendem ausgelegt ist:
als Reaktion darauf, dass der vom Benutzer ausgewählte Ziel-Browser der Fremdbrowser ist, Verlinken mit einer Account-Login-Seite des Fremdbrowsers, und wenn sich der Benutzer erfolgreich in den Account einloggt, Erhalten von Online-Bookmarks des Fremdbrowsers durch ein Crawling-Verfahren mithilfe eines Web-Crawlers, und Importieren der Online-Bookmarks des Fremdbrowsers in den mobilen Browser; und
als Reaktion darauf, dass der vom Benutzer ausgewählte Ziel-Browser ein System-Browser ist, Erhalten eines Verzeichnisses von Bookmarks des System-Browsers und Importieren der Bookmarks des System-Browsers in den mobilen Browser,
wobei der System-Browser ein auf dem mobilen Endgerät installierter Browser ist, der Bookmarks lokal auf dem mobilen Endgerät in einem importierbaren Format speichert, und der Fremdbrowser ein mobiler Browser ist, anders als der System-Browser, der die Online-Bookmark-Funktionalität unterstützt.

7. Mobiles Endgerät nach Anspruch 6,
wobei das Verschiebemodul (303) darüber hinaus dazu ausgelegt ist:
nach dem Importieren der Online-Bookmarks des Fremdbrowsers in den mobilen Browser einen Fremdbrowser-Bookmark-Ordner auf der Bookmark-Seite des mobilen Browsers zu erzeugen.

8. Mobiles Endgerät nach Anspruch 6, wobei:
die verfügbaren Browser den System-Browser, einen PC-seitigen Browser und den Fremdbrowser umfassen;
die verfügbaren Browser dem Benutzer über eine Optionsliste auf der Bookmark-Seite des mobilen Browsers angezeigt werden; und
der PC-seitige Browser ein vom Benutzer auf einem Personal-Computer verwendeter Browser ist und mit einem Server in Verbindung gesetzt werden kann, die es dem Benutzer ermöglichen, Bookmarks über ein Netzwerk abzuspeichern und abzurufen.

9. Mobiles Endgerät nach Anspruch 6, wobei das Verschiebemodul (303) dazu ausgelegt ist,
nach dem Importieren der Bookmarks des System-Browsers in den mobilen Browser einen System-Browser-Bookmark-Ordner auf der Bookmark-Seite des mobilen Browsers zu erzeugen.

10. Mobiles Endgerät nach Anspruch 8, wobei das Verschiebemodul (303) zu Folgendem ausgelegt ist:
als Reaktion darauf, dass der vom Benutzer ausgewählte Ziel-Browser der PC-seitige Browser ist,
Anzeigen eines Benutzer-Login-Fensters auf der Bookmark-Seite des mobilen Browsers;
wenn sich der Benutzer erfolgreich in das Benutzer-Login-Fenster einloggt, Erhalten von Online-Bookmarks des PC-seitigen Browsers, die dem Benutzer angezeigt werden;
Importieren der Bookmarks des PC-seitigen Browsers in den mobilen Browser; und
Erzeugen eines PC-seitigen Browser-Bookmark-Ordners auf der Bookmark-Seite des mobilen Browsers.

## Revendications

1. Procédé de déplacement de signets sur un terminal mobile comportant un navigateur mobile, comprenant :
la réception (S101) d'une instruction de déclenchement depuis un utilisateur du navigateur mobile ;
le déclenchement d'une fonction de déplacement de signets sur le terminal mobile ;
le fait d'inviter, sur une page de signets du navigateur mobile, l'utilisateur à sélectionner au moins un navigateur cible ayant des signets à déplacer à partir d'une liste de navigateurs disponibles, sachant que les navigateurs disponibles incluent au moins un navigateur tiers et un navigateur système ;
la détermination (1031) du navigateur cible sélectionné par l'utilisateur ; et
en réponse au fait que le navigateur cible sélectionné par l'utilisateur est le navigateur tiers, la liaison (1032) à une page de connexion de compte du navigateur tiers, et lorsque l'utilisateur se connecte avec succès au compte, l'obtention (1033) de signets en ligne du navigateur tiers par un procédé de collecte moyennant un collecteur et l'importation (1033) des signets en ligne du navigateur tiers dans le navigateur mobile ; et
en réponse au fait que le navigateur cible sélectionné par l'utilisateur est un navigateur système, l'obtention (1035) d'un répertoire de signets du navigateur système et l'importation (1035) des signets du navigateur système dans le navigateur mobile,
sachant que le navigateur système est un navigateur installé sur le terminal mobile et qui stocke des signets localement sur le terminal mobile dans un format importable, et le navigateur tiers est un navigateur mobile, autre que le navigateur système, qui prend en charge une fonctionnalité de signets en ligne.

2. Le procédé selon la revendication 1,
sachant qu'après l'importation (1033) des signets en ligne du navigateur tiers dans le navigateur mobile, le procédé comprend en outre :
la création (1034) d'un dossier de signets de navigateur tiers sur la page de signets du navigateur mobile.

3. Le procédé selon la revendication 1, sachant que :
les navigateurs disponibles incluent le navigateur système, un navigateur côté PC, et le navigateur tiers ;
les navigateurs disponibles sont proposés à l'utilisateur via une liste d'option sur la page de signets du navigateur mobile ; et
le navigateur côté PC est un navigateur utilisé par l'utilisateur sur un ordinateur personnel et est apte à communiquer avec un serveur qui permet à l'utilisateur de stocker et de récupérer des signets via réseau.

4. Le procédé selon la revendication 1,
sachant qu'après l'importation (1035) des signets du navigateur système dans le navigateur mobile, le procédé comprend en outre :
la création (1036) d'un dossier de signets de navigateur système sur la page de signets du navigateur mobile.

5. Le procédé selon la revendication 3, comprenant en outre :
en réponse au fait que le navigateur cible sélectionné par l'utilisateur est le navigateur côté PC,
l'affichage (1037) d'une fenêtre de connexion d'utilisateur sur la page de signets du navigateur mobile ;
lorsque l'utilisateur se connecte avec succès dans la fenêtre de connexion d'utilisateur, l'obtention (1038) de signets en ligne du navigateur côté PC affiché à l'utilisateur ;
l'importation (1038) des signets du navigateur côté PC dans le navigateur mobile ; et
la création (1039) d'un dossier de signets de navigateur côté PC sur la page de signets du navigateur mobile.

6. Terminal mobile comportant un navigateur mobile, comprenant :
un module déclencheur (301) configuré pour recevoir une instruction de déclenchement depuis un utilisateur du navigateur mobile, et pour déclencher une fonction de déplacement de signets sur le terminal mobile ;
un module de sélection (302) configuré pour inviter, sur une page de signets du terminal mobile, l'utilisateur à sélectionner au moins un navigateur cible ayant des signets à déplacer à partir d'une liste de navigateurs disponibles, et pour déterminer le navigateur cible sélectionné par l'utilisateur, sachant que les navigateurs disponibles incluent au moins un navigateur tiers et un navigateur système ;
un module de déplacement (303) configuré pour :
en réponse au fait que le navigateur cible sélectionné par l'utilisateur est le navigateur tiers, la liaison à une page de connexion de compte du navigateur tiers, et lorsque l'utilisateur se connecte avec succès au compte, l'obtention de signets en ligne du navigateur tiers par un procédé de collecte moyennant un collecteur et l'importation des signets en ligne du navigateur tiers dans le navigateur mobile ; et
en réponse au fait que le navigateur cible sélectionné par l'utilisateur est un navigateur système, l'obtention d'un répertoire de signets du navigateur système et l'importation des signets du navigateur système dans le navigateur mobile,
sachant que le navigateur système est un navigateur installé sur le terminal mobile et qui stocke des signets localement sur le terminal mobile dans un format importable, et le navigateur tiers est un navigateur mobile, autre que le navigateur système, qui prend en charge une fonctionnalité de signets en ligne.

7. Le terminal mobile selon la revendication 6,
sachant que le module de déplacement (303) est en outre configuré pour :
après l'importation des signets en ligne du navigateur tiers dans le navigateur mobile, créer un dossier de signets de navigateur tiers sur la page de signets du navigateur mobile.

8. Le terminal mobile selon la revendication 6, sachant que :
les navigateurs disponibles incluent le navigateur système, un navigateur côté PC, et le navigateur tiers ;
les navigateurs disponibles sont proposés à l'utilisateur via une liste d'option sur la page de signets du navigateur mobile ; et
le navigateur côté PC est un navigateur utilisé par l'utilisateur sur un ordinateur personnel et est apte à communiquer avec un serveur qui permet à l'utilisateur de stocker et de récupérer des signets via réseau.

9. Le terminal mobile selon la revendication 6, sachant que le module de déplacement (303) est configuré pour :
après l'importation des signets du navigateur système dans le navigateur mobile, créer un dossier de signets de navigateur système sur la page de signets du navigateur mobile.

10. Le terminal mobile selon la revendication 8, sachant que le module de déplacement (303) est configuré pour :
en réponse au fait que le navigateur cible sélectionné par l'utilisateur est le navigateur côté PC,
afficher une fenêtre de connexion d'utilisateur sur la page de signets du navigateur mobile ;
lorsque l'utilisateur se connecte avec succès dans la fenêtre de connexion d'utilisateur, obtenir des signets en ligne du navigateur côté PC affiché à l'utilisateur ;
importer les signets du navigateur côté PC dans le navigateur mobile ; et
créer un dossier de signets de navigateur côté PC sur la page de signets du navigateur mobile.
